# EUROPÄISCHE PATENTSCHRIFT

(11) **EP 1 065 920 B1**
(45) Veröffentlichungstag und Bekanntmachung des Hinweises auf die Patenterteilung: **30.01.2002**
(21) Anmeldenummer: 99915601.1
(22) Anmeldetag: 13.03.1999
(51) Int. Cl.: A01F 29/14, A01D 69/00, F16H 47/04

(54) **ZUFÜHRVORRICHTUNG**
FEED DEVICE
DISPOSITIF D'ALIMENTATION

(30) Priorität: 21.03.1998 DE 19812500
(43) Veröffentlichungstag der Anmeldung: 10.01.2001
(73) Patentinhaber: DEERE & COMPANY, Moline, Illinois 61265-8098 (US)
(72) Erfinder: KEMPF, Bernd, D-66494 Althornbach (DE)
(74) Vertreter: Holst, Sönke, Dr.
(86) Internationale Anmeldenummer: EP9901663
(87) Internationale Veröffentlichungsnummer: WO9948353

(56) Entgegenhaltungen:
- EP-A- 0 794 360
- DE-A- 1 816 910
- DE-A- 2 819 200
- GB-A- 2 176 852
- US-A- 4 426 043
- PATENT ABSTRACTS OF JAPAN vol. 097, no. 007, 31. Juli 1997 (1997-07-31) & JP 09 074874 A (MITSUBISHI AGRICULT MACH CO LTD), 25. März 1997 (1997-03-25)

## Beschreibung

Die Erfindung betrifft eine Zuführvorrichtung einer Landmaschine mit wenigstens einer rotierend antreibbaren Fördervorrichtung und einem mechanischen Getriebe, das als Planetengetriebe ausgebildet ist und als Elemente einen Planetenradträger, ein Sonnenrad und ein Ringrad aufweist, wobei je ein Element des Getriebes in Antriebsverbindung mit einem mechanischen Antrieb und der Fördervorrichtung steht.

Die DE 28 19 200 C zeigt einen Feldhäcksler mit einer Zuführvorrichtung, die mehrere parallelachsige Rollen enthält und Erntegut einer Häckselvorrichtung zuführt. Zweimal zwei Rollen werden über ein Stirnradgetriebe angetrieben, das von einem Hydromotor angetrieben wird. Beide Hydromotoren werden von einer Hydraulikpumpe gespeist und können je nach Volumenstrom eine langsamere oder schnellere Ausgangsgeschwindigkeit liefern, wodurch die Schnittlänge variiert wird. Ein derartiger Antrieb benötigt eine Hydraulikpumpe und Hydromotoren hoher Leistung; bei heutigen Anforderungen bedarf es dann auch noch einer Vorrichtung zum Kühlen der umgepumpten Flüssigkeit.

Daneben ist es bekannt, Rollen der Zuführvorrichtung eines Feldhäckslers rein mechanisch anzutreiben und über ein zwischengeschaltetes Getriebe, das in verschiedene Gänge geschaltet werden kann, die Schnittlänge zu variieren.

In der US 4 426 043 A wird ein gezogener Feldhäcksler offenbart, bei dem die das Erntegut einer Häckseltrommel zuführenden Walzen über ein Planetengetriebe in Drehung versetzbar sind. Das Sonnenrad des Planetengetriebes ist mit dem Antrieb verbunden, der Planetenradträger treibt die Walzen an. Das Ringrad kann in einem ersten Betriebsmodus frei drehen, so daß die Walzen im Leerlauf sind. In einem zweiten Betriebsmodus ist das Ringrad mit dem Sonnenrad gekoppelt, und in einem dritten Betriebsmodus wird es ortsfest gehalten. Der zweite und dritte Betriebsmodus ermöglichen einen Vor- bzw. Rückwärtslauf. Zur Änderung der Drehgeschwindigkeit der Walzen muß ein Ritzel gewechselt werden.

In der EP 794 360 A wird eine Drehmomentübertragungseinrichtung mit einem Planetengetriebe offenbart. Das Sonnenrad wird angetrieben, der Planetenradträger dient als Abtrieb und das Ringrad wird durch einen Hydraulikmotor mit variierbarer Drehzahl angetrieben, so daß die Drehzahl des Abtriebs einstellbar und sogar umkehrbar ist. Als nachteilig ist dabei anzusehen, daß die Drehzahl des Hydraulikmotors recht hoch sein muß, um eine Umkehrung der Drehrichtung des Abtriebs zu erzielen.

Das der Erfindung zugrunde liegende Problem wird darin gesehen, eine verbesserte Antriebsvorrichtung bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird aufgrund des mechanischen Getriebes ein hoher Wirkungsgrad und mittels der Überlagerung durch den Motor eine Drehzahländerung erreicht. Diese Lösung hat demnach zur Folge, daß die Hauptleistung durch das mechanische Getriebe verläuft, während der Motor nur eine geringe Leistung in das Getriebe einleitet und somit relativ klein ausgelegt werden kann. Infolgedessen kann sowohl ein Elektro- wie auch ein Hydromotor verwendet werden. Die Verwendung einer Kupplung führt zu der Möglichkeit, das Getriebe in sich zu blockieren und einen von dem Motor eingeleiteten Antrieb durchzuleiten. Auf diese Weise kann der Motor alleine zum Antrieb der nachgeschalteten Komponenten benutzt werden, was insbesondere dann von großem Vorteil ist, wenn diese mit veränderlicher Geschwindigkeit und in einer anderen Richtung angetrieben werden sollen. Ein solcher Fall liegt beim Schleifen der Häckselvorrichtung vor.

Zwar können der Motor, der mechanische Antrieb und die Fördervorrichtung grundsätzlich beliebig an dem Sonnenrad, dem Ringrad oder dem Planetenradträger angreifen - sinnvoll ist es jedoch, den Motor und den mechanischen Antrieb auf das Sonnenrad und das Ringrad wirken zu lassen, so daß der Abtrieb aus dem Planetenradträger erfolgt.

Wenn das Gehäuse des Getriebes von dem Motor getrennt ist, und diesen in einer Flanschverbindung oder dergleichen aufnehmen kann, ist es durch die Möglichkeit, unterschiedliche Motoren anzubauen, gegeben, Zuführvorrichtungen mit unterschiedlich hohem Leistungsvermögen zu erhalten.

Es kann einer Kupplung zur Verbindung des Planetenradträgers mit dem Antrieb, d. h. auch mit dem Sonnenrad, vorgesehen sein. Wesentlich für die Anordnung der Kupplung ist lediglich, daß sie geeignet ist, das als Planetengetriebe ausgebildete Getriebe zu blockieren, d. h. sie kann auch an einer anderen Stellen vorgesehen werden.

Die Verwendung einer oder mehrerer kraftschlüssiger Kupplungen läßt ein Einrücken der Kupplung zu nahezu jedem Zeitpunkt zu.

Ein bevorzugtes Einsatzgebiet ist bei als Feldhäcksler oder Mähdrescher ausgebildeten Landmaschinen gegeben, da diese stets unterschiedlichen Erntebedingungen unterworfen werden und somit besser betrieben werden können, wenn eine stufenlose Anpassung zum Erreichen der geforderten Ergebnisse mit geringem Leistungsaufwand möglich ist. Unterschiedliche Einzugsgeschwindigkeiten sind z. B. am Schrägförderer eines Mähdreschers, an den Pflückwalzen eines Maispflückers oder an einer Pick-Up sehr hilfreich.

Da die Schnittlänge von Erntegut von Gutart und -beschaffenheit, von dem damit zu fütternden Vieh und von Forderungen des Landwirts abhängt und eine relativ schnelle Anpassung innerhalb eines großen Geschwindigkeitsbereichs gewünscht ist, entwickelt die Erfindung bei einem Schnittlängengetriebe eines Feldhäckslers ganz besondere Vorteile.

In der Zeichnung sind zwei nachfolgend näher beschriebene Ausführungsbeispiele der Erfindung dargestellt. Es zeigt:
- Fig. 1: eine Landmaschine in schematischer Darstellung und Seitenansicht,
- Fig. 2: eine Antriebsvorrichtung einer erfindungsgemäßen Zuführvorrichtung in schematischer Darstellung und
- Fig. 3: eine gegenüber der Antriebsvorrichtung nach Figur 2 geringfügig abgewandelte Ausführungsform der Antriebsvorrichtung.

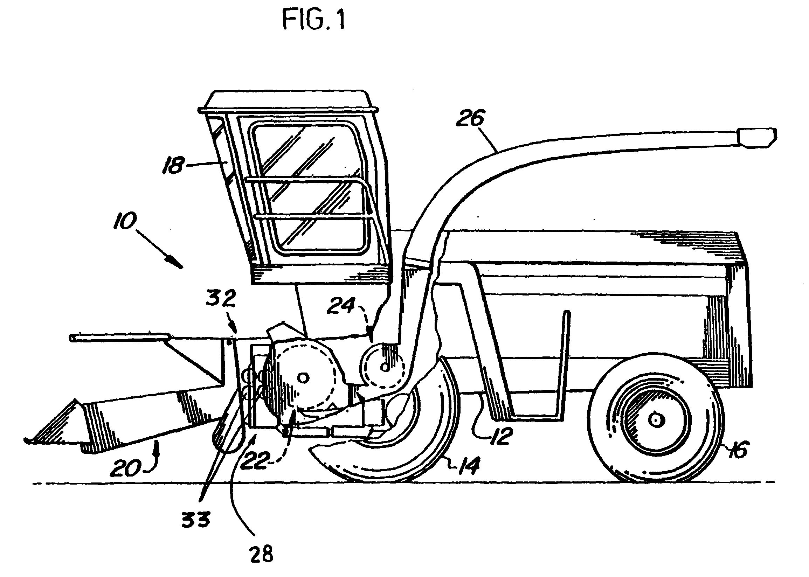

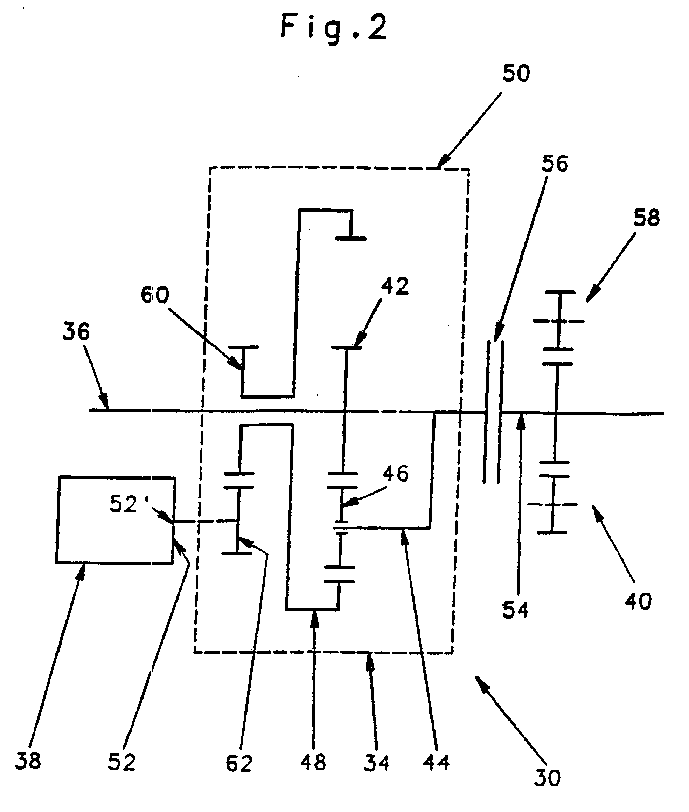

Eine in Figur 1 dargestellte Landmaschine 10 in der Art eines Feldhäckslers weist einen Rahmen 12 auf, der sich über vordere und rückwärtige Räder 14, 16 auf dem Boden abstützt. Die Bedienung der Landmaschine 10 erfolgt von einer Fahrerkabine 18 aus, von der eine Erntebergungsvorrichtung 20 während des Betriebs einsehbar ist. Von der Erntebergungsvorrichtung 20 aufgenommenes Erntegut wird in einer Häckselvorrichtung 22 in kurze Stücke geschnitten und mittels eines Gebläses 24 durch einen Austragsschacht 26 einem nicht gezeigten Begleitfahrzeug zugeworfen. Zwischen der Erntebergungsvorrichtung 20 und der Häckselvorrichtung 22 erstreckt sich eine erfindungsgemäße Zuführvorrichtung 28, die über eine in Figur 2 näher dargestellte Antriebsvorrichtung 30 angetrieben wird und eine Fördervorrichtung 32 mit vier parallelachsigen Rollen 33 enthält, die zwischen sich das Erntegut in einer im wesentlichen horizontalen Ebene in Eingriff mit der Häckselvorrichtung 22 führen. Die Rollen 33 sind üblicherweise in ein oberes und ein unteres Paar zusammengefaßt. Es ist ersichtlich und bekannt, daß die Länge der durch die Häckselvorrichtung 22 abgetrennten Teile von der Fördergeschwindigkeit der Rollen 33 in der Zuführvorrichtung 28 abhängt.

Die weitere Beschreibung nimmt Bezug auf das in Figur 2 Gezeigte.

Die in Figur 2 gezeigte Antriebsvorrichtung 30 enthält ein Getriebe 34, einen mechanischen Antrieb 36, einen Motor 38 und einen Abtrieb 40.

Das Getriebe 34 ist als ein Planetengetriebe mit einem Sonnenrad 42, einem Planetenradträger 44 mit Planetenrädern 46, einem Ringrad 48 und einem Gehäuse 50 ausgebildet.

Das Sonnenrad 42 steht in drehfester Verbindung mit dem Antrieb 36 in mechanischer Bauweise, der in dem vorliegenden Ausführungsbeispiel als eine Welle dargestellt ist, die auf nicht gezeigte Weise, wie auch das Ringrad 48 und der Planetenradträger 44 in dem Gehäuse 50 drehbar gelagert ist. Der mechanische Antrieb 36 erstreckt sich durch einen zentralen Bereich des glockenförmig gebildeten Ringrads 48 und wird z. B. von einem Ketten- oder Riementrieb oder einem Zahnradgetriebe abgenommen.

Der Motor 38 ist fremdkraftbetrieben, und zwar vorzugsweise hydraulisch, was lediglich durch eine nicht näher bezeichnete Leitung angedeutet ist. Es ist davon auszugehen, daß ein Motor 38 mit einer Nennleistung von ca. 10 KW und mit variabler Ausgangsdrehzahl ausreicht. Die Drehzahlregelung kann auf verschiedene herkömmliche Arten durch Fördermengenreduzierung bzw. -erhöhung erfolgen. Der Motor 38 weist eine Flanschfläche 52 auf, die einen Anschluß des Motors 38 an eine korrespondierende Flanschfläche 52' an dem Gehäuse 50 ermöglicht.

Der Abtrieb 40 enthält eine Welle 54, eine Kupplung 56 und ein Verzweigungsgetriebe 58 und dient der Übertragung der Leistung von dem Getriebe 30 auf die Rollen 33.

Die Welle 54 kann mittels der Kupplung 56 drehfest mit dem Planetenradträger 44 verbunden oder von diesem getrennt werden.

Die Kupplung 56 kann sowohl form- als auch kraftschlüssig ausgebildet sein und auch die Funktion einer Überlastkupplung einnehmen.

Das Verzweigungsgetriebe 58 ist als Stirnradgetriebe oder als Umschlingungsgetriebe ausgebildet, und zwar derart, daß entsprechend der Anzahl der Rollen 33 Räder miteinander in Drehung versetzt werden und synchron drehen, um die Rollen 33 anzutreiben. Auf diese Weise wird das Erntegut wie eine Matte zwischen den oberen und den unteren Rollen 33 befördert und in den Wirkungskreis der Häckselvorrichtung 22 gebracht, wo es entsprechend der sich aus der Umfangsgeschwindigkeit der Rollen 33 ergebenden Zuführgeschwindigkeit in mehr oder weniger große Stücke geschnitten wird.

Das Sonnenrad 42 steht in drehfester Verbindung mit dem Antrieb 36.

Der Planetenradträger 44 wird einerseits von den Planetenrädern 46 in Drehung versetzt und schließt andererseits an die Kupplung 56 an, um über diese die Welle 54 anzutreiben.

Die Planetenräder 46 rollen zwischen dem Sonnenrad 42 und dem Ringrad 48 auf dem Planetenradträger 44 ab, wobei sich die Drehrichtung und die Geschwindigkeit nach dem Verhältnis der Drehzahlen des Sonnenrads 42 und des Ringrads 48 zueinander richten. In dem bevorzugten Ausführungsbeispiel sind drei Planetenräder 46 vorgesehen, wobei diese Zahl jedoch auch über- oder unterschritten werden kann.

Das Ringrad 48 nimmt in seinem Innern die Planetenräder 46, den Planetenradträger 44 und das Sonnenrad 42 auf, und ist in seinem geschlossenen Bereich mit einem Zahnrad 60 versehen und mit diesem drehfest verbunden. Dieses Zahnrad 60 kämmt mit einem Zahnrad 62, das von dem Motor 38 angetrieben wird, bzw. sich auf dessen Ausgangswelle befindet.

Ausgehend von der bisher erfolgten Beschreibung und der Darstellung in der Zeichnung ergibt sich folgende Funktion.

Der Antrieb 36 versetzt das Sonnenrad 42 in Drehung mit einer konstanten Drehzahl. Die Planetenräder 46 wälzen auf dem Sonnenrad 42 ab und versetzen den Planetenradträger 44 abhängig von der Relativgeschwindigkeit zwischen dem Sonnenrad 42 und dem Ringrad 48 in Drehung. Der Planetenradträger 44 treibt über die Kupplung 56 die Welle 54 und somit das Verzweigungsgetriebe 58 mit den Rollen 33 an. Der Motor 38 treibt über die Zahnräder 60, 62 das Ringrad 48 an, so daß sich ein bestimmtes Übersetzungsverhältnis in dem Getriebe 34 ergibt. Zur Veränderung der Schnittlänge des Ernteguts, die durch eine Veränderung der Umfangsgeschwindigkeit der Rollen 33 erreicht wird, wird das Ringrad 48 über den Motor 38 schneller oder langsamer gedreht, so daß sich das Übersetzungsverhältnis des Getriebes 34 ändert. Diese Veränderung erfolgt somit stufenlos und in einem relativ großen Bereich, ohne daß es einer hohen Leistung des Motors 38 bedarf.

Je nach der von dem Getriebe 34 zu übertragenden Leistung und dem Bereich, innerhalb dessen die Drehzahl verändert werden soll, können unterschiedlich starke und unterschiedlich schnelle Motoren 38 mit ihren Flanschflächen 52 an die Flanschflächen 52' des Gehäuses 50 angebaut werden.

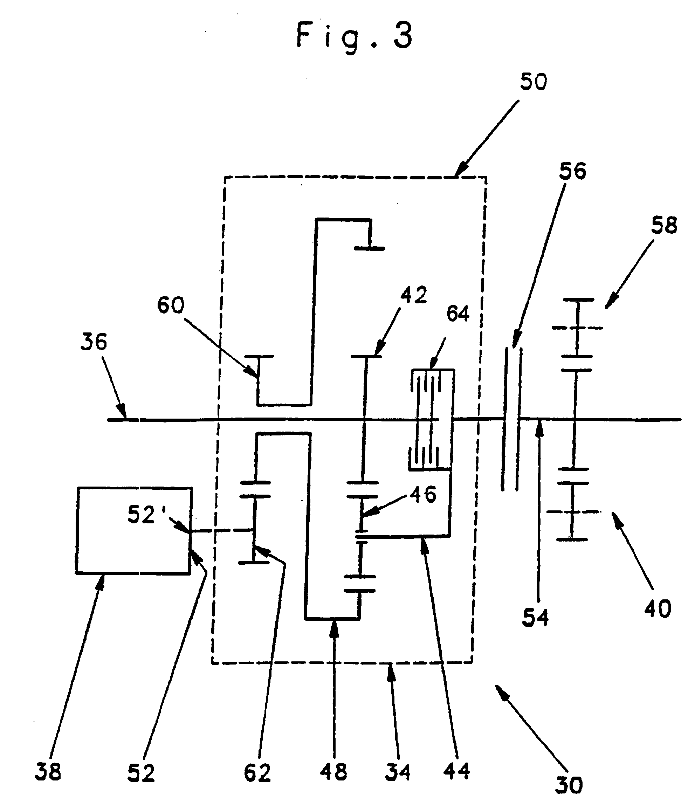

Figur 3 zeigt eine geringfügig veränderte Bauweise der Antriebsvorrichtung.

Die Antriebsvorrichtung 30 nach Figur 3 enthält eine zweite Kupplung 64, und zwar in drehfester Verbindung mit dem Planetenradträger 44 und somit auch ausgangsseitig mit der Antriebsseite der Kupplung 56. Diese Kupplung 64 kann andererseits eine Verbindung mit dem Antrieb 36 und dem Sonnenrad 42 herstellen, wenn die entsprechende Welle gegenüber dem Ausführungsbeispiel nach Figur 2 entsprechend verlängert ist. Auf diese Weise kann das gesamte Getriebe 34 in sich blockiert werden. Wird zusätzlich der Antrieb 36 eingangsseitig von einem vorgeschalteten Getriebe oder Motor getrennt, kann mittels des Motors 38 alleine eine feste Drehbewegung an der Kupplung 56 und der Welle 54 erzeugt werden, und zwar mit veränderlicher Drehzahl und Drehrichtung. Diese Wirkung kann z. B. zum Antrieb der Häckselvorrichtung 22 über deren antriebsmäßige Verbindung mit der Einzugsvorrichtung 28 genutzt werden, wenn diese rückwärts oder vorwärts geschliffen werden soll.

## Patentansprüche

1. Zuführvorrichtung (28) einer Landmaschine mit wenigstens einer rotierend antreibbaren Fördervorrichtung (32) und einem mechanischen Getriebe (34), das als Planetengetriebe ausgebildet ist und als Elemente einen Planetenradträger (44), ein Sonnenrad (42) und ein Ringrad (48) aufweist, wobei je ein Element des Getriebes (34) in Antriebsverbindung mit einem mechanischen Antrieb (36) und der Fördervorrichtung (32) steht, **dadurch gekennzeichnet, daß** das verbleibende Element des Getriebes in Antriebsverbindung mit einem hydraulisch oder elektrisch angetriebenen Motor (38) steht, und daß das mit dem mechanischen Antrieb (36) verbundene Element des Getriebes (34) vom mechanischen Antrieb (36) trennbar und die Antriebskraft des Motors (38) durch das Getriebe (34) zur Fördervorrichtung (32) durchleitbar ist.

2. Zuführvorrichtung nach Anspruch 1, **dadurch gekennzeichnet, daß** der Motor (38) das Ringrad (48) antreibt.

3. Zuführvorrichtung nach Anspruch 1 oder 2, **dadurch gekennzeichnet, daß** der mechanische Antrieb (36) auf das Sonnenrad (42) wirkt.

4. Zuführvorrichtung nach einem oder mehreren der vorherigen Ansprüche 1 bis 3, **dadurch gekennzeichnet, daß** das mechanische Getriebe (34) in einem Gehäuse (50) vorgesehen ist, das eine Flanschvorrichtung (52') zur Aufnahme unterschiedlicher Motoren (38) aufweist.

5. Zuführvorrichtung nach einem oder mehreren der vorherigen Ansprüche, **dadurch gekennzeichnet, daß** der Antrieb (36) mittels einer Kupplung (64) mit dem Planetenradträger (44) trennbar verbunden ist.

6. Zuführvorrichtung nach einem oder mehreren der vorherigen Ansprüche, **dadurch gekennzeichnet, daß** wenigstens eine der Kupplungen (56, 64) kraftschlüssig betätigbar ist.

7. Landmaschine, insbesondere Feldhäcksler oder Mähdrescher, mit einer Zuführvorrichtung (28) nach einem oder mehreren der vorherigen Ansprüche.

8. Feldhäcksler nach Anspruch 7, **dadurch gekennzeichnet, daß** die Fördervorrichtung (32) mehrere Rollen (33) enthält, die zwischen sich Erntegut aufnehmen und es einer Häckselvorrichtung (22) zuführen.

## Claims

1. A feed device (28) of an agricultural machine with at least one conveyor device (32) which can be driven in rotation and a mechanical gear (34) which is formed as a planetary gear and comprises as elements a planet gear carrier (44), a sun gear (42) and a ring gear (48), wherein one element each of the gear (34) is drivably connected to a mechanical drive (36) and the conveyor device (32), **characterized in that** the remaining element of the gear is drivably connected to a hydraulically or electrically driven motor (38) and **in that** the element of the gear (34) connected to the mechanical drive (36) can be disconnected from the mechanical drive (36) and the driving force of the motor (38) can be applied to the conveyor device (32) through the gear (34).

2. A feed device according to claim 1, **characterized in that** the motor (38) drives the ring gear (48).

3. A feed device according to claim 1 or 2, **characterized in that** the mechanical drive (36) acts on the sun gear (42).

4. A feed device according to one or more of the preceding claims 1 to 3, **characterized in that** the mechanical gear (34) is provided in a housing (50) which has a flange device (52') for receiving different motors (38).

5. A feed device according to one or more of the preceding claims, **characterized in that** the drive (36) is connected separably to the planet gear carrier (44) by means of a clutch (64).

6. A feed device according to one or more of the preceding claims, **characterized in that** at least one of the clutches (56, 64) can operate frictionally.

7. An agricultural machine, especially a forage harvester or combine harvester, with a feed device (28) according to one or more of the preceding claims.

8. A forage harvester according to claim 7, **characterized in that** the conveyor device (32) includes a plurality of rollers (33) which receive harvested crop between them and feed it to a chopping device (22).

## Revendications

1. Dispositif d'amenée (28) d'une machine agricole comportant au moins un dispositif de convoyage (32) pouvant être entraîné en rotation, et une transmission mécanique (34), qui est agencée sous la forme d'un engrenage planétaire et comporte, en tant qu'éléments, un porte-satellites (44), une roue planétaire (42) et une couronne dentée à denture intérieure (48), et dans laquelle respectivement un élément de la transmission (34) est relié selon une liaison motrice à un dispositif d'entraînement mécanique (36) et au dispositif de convoyage (32), **caractérisé en ce que** l'autre élément de la transmission est relié selon une liaison motrice à un moteur mû hydrauliquement ou électriquement, et que l'élément de la transmission (34), qui est relié au dispositif d'entraînement mécanique (36), peut être séparé du dispositif d'entraînement mécanique (36) et la force d'entraînement du moteur (38) peut être transmise par la transmission (36) au dispositif de convoyage (32).

2. Dispositif d'amenée selon la revendication 1, **caractérisé en ce que** le moteur (38) entraîne la couronne dentée à denture intérieure (48).

3. Dispositif d'amenée selon la revendication 1 ou 2, **caractérisé en ce que** le dispositif d'entraînement mécanique (36) agit sur la roue planétaire (42).

4. Dispositif d'amenée selon une ou plusieurs des revendications précédentes 1 à 3, **caractérisé en ce que** la transmission mécanique (34) est prévue dans un boîtier (50), qui comporte un dispositif à bride (52') pour le logement de différents moteurs (38).

5. Dispositif d'amenée selon une ou plusieurs des revendications précédentes, **caractérisé en ce que** le dispositif d'entraînement (36) est relié d'une manière séparable au porte-satellites (44) au moyen d'un accouplement (64).

6. Dispositif d'amenée selon une ou plusieurs des revendications précédentes, **caractérisé en ce qu'**au moins l'un des accouplements (56, 64) peut être actionné selon une liaison de force.

7. Machine agricole, notamment ramasseuse-hacheuse ou moissonneuse-batteuse comportant un dispositif d'amenée (28), selon une ou plusieurs des revendications précédentes.

8. Ramasseuse-hacheuse selon la revendication 7, **caractérisée en ce que** le dispositif de convoyage (32) contient plusieurs rouleaux (33), qui reçoivent entre eux la matière récoltée et l'envoient à un dispositif hacheur (22).
